# EUROPÄISCHE PATENTANMELDUNG

(11) **EP 2 361 919 A1**
(43) Veröffentlichungstag der Anmeldung: **31.08.2011**
(21) Anmeldenummer: 11001202.8
(22) Anmeldetag: 15.02.2011
(51) Int. Cl.: C07F 9/6561, C07F 9/6574, C07F 15/00, C07B 35/02, C07B 43/04

(54) **Imidazo[1,5-b]pyridazin-Amino-Phosphor-Liganden und deren Komplexverbindungen**

(30) Priorität: 15.02.2010 DE 102010008085
(71) Anmelder: AIKAA-Chemicals GmbH, 95444 Bayreuth (DE)
(72) Erfinder: Irrgang, Torsten, Dr., 95445 Bayreuth (DE); Kutlescha, Katrin, 95444 Bayreuth (DE); Kempe, Rhett, Prof. Dr., 95444 Bayreuth (DE)
(74) Vertreter: Ackermann, Joachim

(57) **Zusammenfassung**

Die Erfindung betrifft neue NN(R)P-Liganden der Formel **1** (Imidazo[1,5-*b*]pyridazin-substituierte Amino-Phosphor-Liganden) in neutraler oder anionischer Form und damit herstellbare Katalysatoren, insbesondere zur asymmetrischen Katalyse sowie ein Verfahren zur Herstellung solcher Liganden und Katalysatoren.

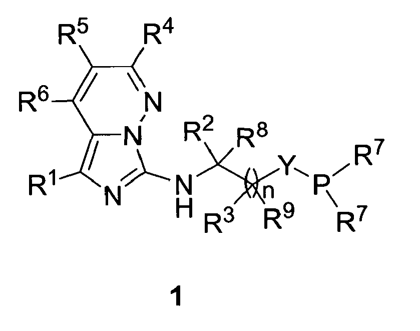

## Beschreibung

Die Erfindung betrifft neue NN(R)P-Liganden (Imidazo[1,5-b]pyridazin-substituierte Amino-Phosphor-Liganden) und damit herstellbare Katalysatoren, insbesondere zur asymmetrischen Katalyse sowie ein Verfahren zur Herstellung solcher Liganden und Katalysatoren.

Selektive Hydrierkatalysatoren, beispielsweise für die (enantioselektive) Reduktion von Iminen und Ketonen spielen in der Technik eine immer bedeutendere Rolle, insbesondere bei der enantioselektiven Darstellung von Aminen und Alkoholen. Enantiomerenreine Alkohole, Amine und Aminosäuren haben als chirale Synthesebausteine eine herausragende technische Bedeutung z.B. bei der Erzeugung pharmazeutischer Wirkstoffe und Agrochemikalien. Beispiele für industriell bedeutende Zielstrukturen mit pharmakologischer Wirkung, die von derartigen chiralen Verbindungen abgeleitet sind, sind z.B. Antibiotika (Levofloxacin®), Antidepressiva (1555U88), Hemmer der Acetylcholinesterase (Rivastigmin®), Antiarrhymetika (Mexiletin), Calcimimetika (Cinacalcet) und antivirale Wirkstoffe (Saquinavir). Bis heute werden zur Herstellung enantiomerenreiner Verbindungen hauptsächlich Chiral-Pool-Synthesen oder die klassische Racematspaltung genutzt. Während die Chiral-Pool-Verfahren durch die Verfügbarkeit der natürlichen chiralen Bausteine limitiert werden, kann bei der klassischen, nicht dynamischen, Racematspaltung nur eine Ausbeute von 50% erzielt werden. Die asymmetrische Katalyse zur Synthese von chiralen Bausteinen stellt somit eine exzellente Herstellungsalternative dar, was den großen Bedarf an chiralen Ligandensystemen zur enantioselektiven Darstellung von chiralen Intermediaten begründet.

Leicht herzustellende deprotonierte Imidazo[1,5-*b*]pyridazin-substituierte Amino-Phosphor-Liganden (Amidophosphorverbindungen, NN(R)P-Liganden) sind als Liganden in der enantioselektiven homogenen Katalyse, bei der enantioselektiven Hydrierung, nicht in Erscheinung getreten. In T. Irrgang, R. Kempe, Eur. J. Inorg. Chem. 2005, 4382-4392; T. lrrgang, Dissertation 2000, Greifswald; D. Friedrich, Dissertation 2009, Bayreuth und T. Irrgang, D. Friedrich, R. Kempe, WO 2008/061663 A1 wurden erstmals Imidazo[1,5-*b*]pyridazin-substituierte AminoVerbindungen und damit herstellbare Katalysatoren zur u.a. hoch enantioselektiven Hydrierung von Ketonen vorgestellt.

Aufgabe der vorliegenden Erfindung ist es nun neue, einfach herzustellende Liganden sowie die entsprechenden katalytisch aktiven Komplexverbindungen bereitzustellen, die sich für eine möglichst gute enantioselektive Reaktionsführung, insbesondere zur asymmetrischen Hydrierung von Iminen und Ketonen, mit guten Ausbeuten eignen.

Die Aufgabe wird durch NN(R)P-Liganden (Imidazo[1,5-*b*]pyridazin-substituierte Amino-Phosphor-Liganden) der Formel **1** gelöst, 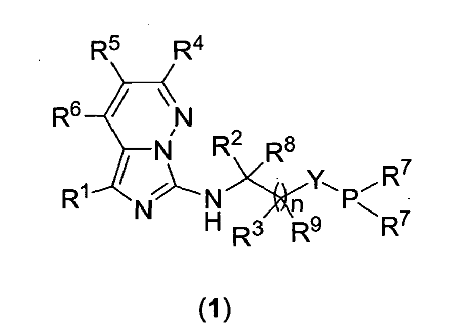 wobei
- n: für eine ganze Zahl von 0 bis 30, bevorzugt für eine Zahl von 1 bis 10, besonders bevorzugt von 1 bis 5, insbesondere für 1 steht,
- Y: für ein Sauerstoff oder Schwefelatom oder eine NH-Gruppe steht,
- R¹-R⁹: unabhängig voneinander einen Rest ausgewählt aus der Gruppe C₁-C₂₄ Alkyl, C₂-C₂₄ Alkenyl, C₃-C₈ Cycloalkyl, C₃-C₈ Cycloalkenyl, C₆-C₁₄ Aryl, C₆-C₁₄ Aryl-C₁-C₁₀-Alkyl, C₂-C₁₃-Heteraryl-C₁-C₁₀-Alkyl,C₁- C₁₀ Heteroalkyl, C₁-C₇ Heterocycloalkyl, C₂-C₁₃ Heteroaryl, Hydroxy, C₁-C₁₀-Alkoxy, C₆-C₁₄ Aryloxy, C₆-C₁₄ Aryl-C₁-C₁₀-Alkoxy, C₂-C₂₄ Acyl, Silyl, Boryl darstellen können, wobei auch die beiden Reste R⁷ unabhängig voneinander für zwei unterschiedliche oder gleiche Reste aus dieser Gruppe stehen können und wobei die Reste R¹, R⁴, R⁵, R⁶ und jeder der beiden Reste R⁷ unabhängig voneinander auch einen Wasserstoffrest darstellen können und wobei R² und R⁸ Wasserstoffreste sein können, wenn mindestens einer der Reste R³ und R⁹ kein Wasserstoffsubstituent ist bzw. R³ und R⁹ verschiedene Nichtwasserstoff-Reste darstellen und wobei R³ und R⁹ Wasserstoffreste sein können, wenn mindestens einer der Reste R² und R⁸ kein Wasserstoffsubstituent ist bzw. R² und R⁸ verschiedene Nichtwasserstoff-Reste darstellen und bei denen die genannten Substituenten R¹ bis R⁹ jeweils ein oder mehrere weitere Substituenten besitzen können, und wobei zwei benachbarte Substituenten R¹, R⁴, R⁵ oder R⁶ oder die Substituenten R², R³, R⁷, R⁸ und R⁹ auch verbrückt sein können und wobei die Liganden der Formel 1 bevorzugt neutral bzw. ionisch, insbesondere anionisch, also z. B. einfach deprotoniert, vorliegen können.

Durch Deprotonierung der sekundären Aminogruppe von Verbindungen der Formel **1** entstehen die entsprechenden Amide.

Y steht bevorzugt für ein Sauerstoffatom.

Bevorzugte (C₁-C₂₄) Alkyl-Substituenten R¹ bis R⁹ im Sinne der vorliegenden Erfindung sind verzweigte oder unverzweigte Alkylreste mit 1 bis 24 Kohlenstoffatomen, insbesondere mit 1 bis 10 Kohlenstoffatomen, besonders bevorzugt mit 1, 2 oder 3 bis 5 Kohlenstoffatomen, wie z.B. Methyl, Ethyl, n-Propyl, iso-Propyl, 1-Methylethyl, n-Butyl, iso-Butyl, tert.-Butyl, 1-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, n-Heptyl, n-Octyl, n-Nonyl, n-Decyl. Bevorzugte Heteroalkylsubstituenten im Sinne der vorliegenden Erfindung sind Alkylsubstituenten, mit 1 bis 7 Kohlenstoffatomen, die 1 bis 3 Heteroatome ausgewählt aus der Gruppe Stickstoff, Schwefel und Sauerstoff, enthalten. Insbesondere enthalten solche Reste nur einen oder zwei gleiche oder zwei verschiedene Heteroatome. Bevorzugte Heteroalkylsubstituenten besitzen 2 bis 5, insbesondere 2 bis 4 Kohlenstoffatome und ein bis zwei Sauerstoff- oder Schwefelatome. Unter die Definition der Heteroalkylsubstituenten fallen auch Alkylreste, die über ein Heteroatom, wie z. B. ein Schwefelatom oder eine Gruppe =N-, -NH- oder -NR-, mit R gleich C₆-C₁₄-Aryl, insbesondere Phenyl, oder C₁-C₁₀-Alkyl-, insbesondere Methyl, Ethyl, Propyl oder Butyl an das Grundgerüst der Formel 1 gebunden sind.

Bevorzugte (C₂-C₂₄) Alkenyl-Substituenten R¹ bis R⁹ im Sinne der vorliegenden Erfindung sind Alkenylreste mit 2 bis 24 Kohlenstoffatomen, insbesondere mit 2 bis 10 Kohlenstoffatomen, besonders bevorzugt mit 2 oder 3 bis 5 Kohlenstoffatomen, wie z. B. Vinyl, Propenyl, Isopropenyl, 1-Butenyl, 2-Butenyl, 1-Pentenyl, 2-Pentenyl, 2-Methyl-1-butenyl, 2-Methyl-2-butenyl, 3-Methyl-1-butenyl, 1-Hexenyl, 1-Heptenyl, 2-Heptenyl, 1-Octenyl oder 2-Octenyl.

Bevorzugte (C₃-C₈) Cycloalkylsubstituenten R¹ bis R⁹ sind substituierte und unsubstituierte Cyclopentyl-, Cyclohexyl-, Cycloheptylreste, Norbornyl und Adamantyl. Bevorzugte entsprechende Heterocycloalkylreste sind Cycloalkylreste, bei denen 1 bis 3 Kohlenstoffatome durch Heteroatome ausgewählt aus der Gruppe Stickstoff, Schwefel und Sauerstoff, ersetzt sind. Insbesondere enthalten solche Reste nur einen oder zwei gleiche oder zwei verschiedene Heteroatome. Bevorzugte Heterocyclen sind Tetrahydrofuranyl, Tetrahydrothiophenyl, Pyrrolidyl, 1,3-Dioxolanyl, 1,3-Dithiolanyl, Imidazolidyl, Tetrahydropyranyl, Tetrahydrothiopyranyl, Piperidyl, 1,4-Dioxanyl, 1,4-Dithianyl, Piperazyl, Oxepanyl, Thiepanyl und Azepanyl.

Bevorzugte Alkoxyreste sind ausgewählt aus der Gruppe der C₁-C₇ Alkoxyreste. Besonders bevorzugt sind asgewählt aus der Gruppe der Methoxy-, Ethoxy-, Propyloxy- und Butyloxyreste, wobei diese Reste auch miteinander verbrückt sein können.

Bevorzugte Acylsubstituenten sind Reste mit 2 bis 12, bevorzugt mit 2 bis 7 Kohlenstoffatomen. Besonders bevorzugte Acylreste sind ausgewählt aus der Gruppe der Formyl-, Acetyl- und Benzoylreste.

Bevorzugte Arylsubstituenten R¹ bis R⁹ sind solche mit 6 bis 12 Kohlenstoffatomen, besonders bevorzugt sind Phenyl, Naphthyl, Fluorenyl, 2-Alkylphenyl, 3-Alkylphenyl, 4-Alkylphenyl, 2,6-Dialkylphenyl, 3,5-Dialkylphenyl, 3,4,5-Trialkylphenyl, 2-Alkoxyphenyl, 3-Alkoxyphenyl, 4-Alkoxyphenyl, 2,6-Dialkoxyphenyl, 3,5-Dialkoxyphenyl, 3,4,5-Trialkoxylphenyl oder 3,5-Dialkyl-4-alkoxyphenyl.

Bevorzugte C₂-C₁₃ Heteroarylsubstituenten R¹ bis R⁹ enthalten 1 bis 3 Heteroatome, bevorzugt aus der Gruppe Stickstoff, Sauerstoff und Schwefel. Besonders bevorzugt sind Furanyl, Thiophenyl, Pyrryl, Pyridyl und Pyrazyl.

Bevorzugte Arylalkyl bzw. Heteroarylalkylreste setzen sich aus den bevorzugten Alkylresten zusammen die mit mindestens einem der bevorzugten Aryl- oder Heteroarylreste substituiert sind. Bevorzugte Reste dieser Art besitzen einen Aryl-oder Heteroarylsubstituenten, wie z. B. Phenyl-C₁-C₁₀-alkylreste, die aus einem Alkylrest mit 1 bis 10 Kohlenstoffatomen bestehen und einen Phenylsubstituenten tragen. Besonders bevorzugte Reste sind Benzyl, 2-Phenylethyl, 2- oder 3-Phenylpropyl, Furanylmethyl, Thiophenylmethyl, Pyrrylmethyl, Pyridylmethyl und Pyrazylmethyl.

Bevorzugte Aryloxy bzw. Arylalkoxyreste setzen sich aus den bevorzugten Aryl- bzw. Alkoxyresten zusammen. Besonders bevorzugte Reste dieser Gruppe sind Phenoxy, Phenylmethoxy und Phenylethoxy.

Besonders bevorzugte Silylsubstituenten R¹ bis R⁹ sind Trimethylsilyl, tert.-Butyldiphenylsilyl, tert.-Butyldimethylsilyl und Triisopropylsilyl.

Besonders bevorzugt stellt R¹ einen Rest ausgewählt aus der Gruppe bestehend aus Phenyl, Naphthyl, Benzyl, C₁-C₅ Alkyl, insbesondere Methyl, Ethyl, iso-Propyl n-Propyl, iso-Butyl, n-Butyl, tert.-Butyl, n-Pentyl-, Pent-2-yl, Pent-3-yl, oder Heteroaryl dar, die gegebenenfalls weitere Substituenten tragen können. Insbesondere kann die Alkylgruppe ein oder mehrfach fluoriert sein. Bevorzugte fluorierte Alkylgruppen sind Mono-, Di- und Trifluormethyl, Mono-, Di-, Tri- und Pentafluorethyl, besonders bevorzugt ist dabei eine Trifluormethylgruppe. In ganz besonders bevorzugt Ausführungsformen ist R¹ ein Wasserstoff-, Methyl-, Ethyl- oder Phenylsubstituent.

Besonders bevorzugte Reste R⁴ und R⁶ sind unabhängig voneinander ausgewählt aus der Gruppe bestehend aus Phenyl, Naphthyl, Benzyl, C₁-C₅ Alkyl, insbesondere Methyl, Ethyl, iso-Propyl, n-Propyl, iso-Butyl, n-Butyl, tert.-Butyl, n-Pentyl-, Pent-2-yl und Pent-3-yl, die gegebenenfalls weitere Substituenten tragen können. Insbesondere kann die Alkylgruppe ein oder mehrfach fluoriert sein. Bevorzugte fluorierte Alkylgruppen sind Mono-, Di- und Trifluormethyl, Mono-, Di-, Tri- und Pentafluorethyl, besonders bevorzugt ist dabei eine Trifluormethyl. In ganz besonders bevorzugten Ausführungsformen ist R⁴ und R⁶ unabhängig voneinander ein Wasserstoff-, Methyl-, Ethyl- oder Phenylsubstituent.

R⁵ ist in der bevorzugten Ausführungsform ein Wasserstoffsubstituent oder eine C₁-C₅ Alkylgruppe, insbesondere eine Methyl, Ethyl, iso-Propyl, n-Propyl, iso-Butyl, n-Butyl, tert.-Butylgruppe, n-Pentyl-, Pent-2-yl und Pent-3-yl, Phenyl, Naphthyl oder Benzyl. In einer besonders bevorzugten Ausführungsform ist R⁵ ein Wasserstoffsubstituent.

Bei R² und R⁸ handelt es sich bevorzugt unabhängig voneinander um Reste die unabhängig voneinander ausgewählt sind aus der Gruppe der C₆-C₁₄ Aryl-Reste, wie z. B. Phenyl und Naphthyl, der aliphatisch verzweigten oder unverzweigten C₁-C₁₀ Alkylreste, wie z. B. besonders bevorzugt Methyl, Ethyl, iso-Propyl, n-Propyl, n-Butyl, iso-Butyl, tert.-Butyl, n-Pentyl-, Pent-2-yl und Pent-3-yl, der Alkylarylreste, wie z. B. Benzyl, der C₂-C₁₂ Acylreste, wie z. B. Formyl, Acetyl und Benzoyl oder um Wasserstoffsubstituenten. Gegebenenfalls können die genannten Reste weitere Substituenten tragen insbesondere weitere Hydroxyl-oder Ketogruppen, bevorzugte Reste dieser Art sind Hydroxy-C₁-C₁₀ Alkyl- und Hydroxy-C₆-C₁₄-Aryl-Reste.

R³ und R⁹ sind bevorzugt unabhängig voneinander Wasserstoffsubstituenten, Hydroxyreste, , C₆-C₁₄ Aryl-Reste, wie z. B. Phenyl und Naphthyl, aliphatisch verzweigte oder unverzweigte C₁-C₁₀ Alkylreste, wie z. B. besonders bevorzugt Methyl, Ethyl, iso-Propyl, n-Propyl, n-Butyl, iso-Butyl, tert.-Butyl, n-Pentyl-, Pent-2-yl und Pent-3-yl, C₂-C₁₂ Acylreste, wie z. B. Formyl, Acetyl und Benzoyl oder Arylalkylreste, wie z. B. Phenyl-C₁-C₁₀-alkylreste, insbesondere Benzyl. Gegebenenfalls können die genannten Reste weitere Substituenten tragen insbesondere weitere Hydroxyl- oder Ketogruppen, bevorzugte Reste dieser Art sind Hydroxy-C₁-C₁₀ Alkyl- und Hydroxy-C₆-C₁₄-Aryl-Reste. In einer weiteren bevorzugten Ausführungsform stellen die Reste R³ und R⁹ Wasserstoffsubstituenten dar und n ist gleich einer ganzen Zahl von 1 bis 5, so dass die Gruppe -(CR³R⁹)ₙ- z. B. eine Methylen-, Ethylen-, Propylen- oder Butylengruppe darstellt.

Die beiden Reste R⁷ stehen unabhängig voneinander bevorzugt für einen verbrückten oder nicht verbrückten C₁-C₁₀ Alkyl-, C₆-C₁₄ Aryl-, C₅-C₈-Cycloalkyl-, Phenyl-C₁-C₁₀-alkyl-, C₁-C₁₀ Alkoxy-, C₆-C₁₄ Aryloxy-, C₆-C₁₄ Aryl-C₁-C₁₀-Alkoxy-oder Hydroxysubstituenten. Besonders bevorzugt stehen die beiden Reste R⁷ für gleiche oder verschiedene nicht verbrückte Reste ausgewählt aus der Gruppe Methyl-, Ethyl-, n-Propyl-, iso-Propyl-, n-Butyl-, iso-Butyl-, tert.-Butyl-, n-Pentyl-, Pent-2-yl, Pent-3-yl, Methoxy, Ethoxy-, Cyclohexyl-, Phenyl-, Naphtyl-, Benzyl-, Phenoxy-, Phenylmethoxy-, Phenylethoxy- oder für einen verbrückten Rest, wobei beide Reste R⁷ zusammen einen Rest der Formel -O-(C₁-C₁₀-Alkyl)-O-, bevorzugt einen -O-CH₂-CH₂-O- Rest, oder einen C₆-C₁₂-Aryl-1,2-dioxyrest, bevorzugt einen Phenyl-1,2-dioxyrest, bilden. Die Aryldioxyreste können dabei als ein Aryloxyrest aufgefasst werden, der mit einer Hydroxygruppe verbrückt ist.

Verbrückte Reste sind bevorzugt durch eine direkte kovalente Bindung oder durch eine C₁-C₁₀-Alkylenbrücke miteinander verknüpft. Besonders bevorzugt ist die Verbrückung mit einer direkten kovalenten Bindung oder über eine Methylen, Ethylen, Propylen oder Butylenbrücke.

Weiterhin können die genannten Substituenten R¹ bis R⁹ von Verbindungen der Formel 1 jeweils ein oder mehrere weitere Substituenten besitzen, wobei bevorzugte Substituenten unabhängig voneinander aus der Gruppe C₁-C₁₂ Alkyl, C₂-C₁₂ Alkenyl, C₁-C₁₀ Halogenalkyl, C₃-C₈ Cycloalkyl, C₃-C₈ Cycloalkenyl, C₂-C₉ Heteroalkyl, C₁-C₉ Heteroalkenyl, C₆-C₁₄ Aryl, Phenyl, Naphthyl, Fluorenyl, C₂-C₇ Heteroaryl, C₁-C₁₀ Alkoxy, C₁-C₉ Trihalomethylalkyl, Trifluormethyl, Trichlormethyl, Fluoro, Chloro, Hydroxy, C₁-C₈ substituierte Amino der Formen mono-, di-, tri- C₁-C₈-Alkylamino oder C₂-C₈ Alkenylamino oder mono-, di-, tri- C₆-C₈ Arylamino, Carbonyl (Keto) oder Carboxyl, Carboxylato der Form COOR', wobei R' ein einwertiges Kation oder ein C₁-C₈ Alkyl darstellt, oder C₁-C₈-Acyloxy, ausgewählt werden können. Die Zahl der Heteroatome in Heteroverbindungen ausgewählt aus der Gruppe Stickstoff, Sauerstoff und Schwefel, beträgt bevorzugt 1 bis 3. Unter einer Halogenverbindung wird bevorzugt eine entsprechende Fluoro-, Chloro-oder Bromoverbindung verstanden.

Eine geeignete Ausführungsform der Liganden der Formel 1 stellen Verbindungen dar, bei denen die Gruppe -(CR³R⁹)ₙ- eine Methylen-, Ethylen-, Propylen- oder Butylengruppe ist, wobei die Methylengruppe besonders bevorzugt ist und R¹, R², R⁴, R⁵ R⁶ unabhängig voneinander einen Rest ausgewählt ist aus der Gruppe C₁-C₁₀ Alkyl, C₂-C₁₀ Alkenyl, C₃-C₈ Cycloalkyl, C₃-C₈ Cycloalkenyl, C₆-C₁₄ Aryl, C₆-C₁₄ Aryl-C₁-C₁₀-Alkyl, C₂-C₁₃ Heteroaryl-C₁-C₁₀-Alkyl, C₂-C₁₂ Acyl, C₁-C₁₀ Alkoxy, C₁-C₇ Heterocycloalkyl, C₂-C₁₃ Heteroaryl, Hydoxyl, und wobei die Reste R¹, R⁴, R⁵ und R⁶ unabhängig voneinander auch einen Wasserstoffrest darstellen können und jeder der beiden Reste R⁷ unabhängig voneinander für einen verbrückten oder nicht verbrückten C₁-C₁₀ Alkyl-, C₆-C₁₄ Aryl-, C₅-C₈ Cycloalkyl, Phenyl-C₁-C₁₀-Alkyl, C₁-C₁₀ Alkoxy, Phenoxy oder Phenyl-C₁-C₅-alkoxysubstituent steht oder beide Reste R⁷ zusammen für einen Phenyl-1,2-dioxysubstituenten stehen und R⁸ einen Wasserstoffrest darstellt.

Liganden der Formel 1 bei denen R¹ für einen Wasserstoff-, Methyl- oder Phenylrest steht und
einer der Reste R² und R⁸ für einen Methyl-, Ethyl-, n-Propyl-, iso-Propyl, Butyl-, wie z. B. iso-Butyl oder tert.-Butyl- oder für einen Phenyl-, Benzyl- oder 2-Phenylethylrest und der andere Rest für einen Wasserstoffrest steht und
R⁴ und R⁶ unabhängig voneinander für einen Wasserstoff- oder Methylrest stehen und
R⁵ für einen Wasserstoffrest steht und
R³ und R⁹ für einen Wasserstoffrest stehen und
die beiden Reste R⁷ für zwei unterschiedliche oder gleiche Reste ausgewählt aus der Gruppe Methyl-, Ethyl-, n-Propyl-, iso-Propyl-, Butyl-, wie z. B. iso-Butyl- oder tert.-Butyl-, Cyclohexyl-, Methoxy-, Ethoxy-, Phenyl-, Phenoxy-, Phenylmethoxy oder Phenylethoxy- stehen oder die beiden Reste R⁷ zusammen einen Rest der Formel -O-CH₂-CH₂-O- oder einen Phenyl-1,2-dioxy- bilden und
Y für ein Sauerstoffatom steht und
n gleich 1, 2, 3 oder 4 ist, wobei n besonders bevorzugt gleich 1 ist,
stellen ebenfalls eine besonders geeignete Ausführungsform dar.

Eine alternative aber ebenso geeignete Ausführungsform stellen Liganden der Formel **1** dar, bei denen
R¹ für einen Wasserstoff-, Methyl- oder Phenylrest steht und
einer der Reste R³ oder R⁹ für einen Methyl-, Ethyl-, n-Propyl-, iso-Propyl, Butyl-, wie z.B. iso-Butyl- oder tert.-Butyl- oder für einen Phenyl-, Benzyl- oder 2-Phenylethylrest und der andere Rest für einen Wasserstoffrest steht und
R⁴ und R⁶ unabhängig voneinander für einen Wasserstoff- oder Methylrest stehen und
R⁵ für einen Wasserstoffrest steht und
R² und R⁸ für einen Wasserstoffrest stehen und
die beiden Reste R⁷ für zwei unterschiedliche oder gleiche Reste ausgewählt aus
der Gruppe Methyl-, Ethyl-, n-Propyl, iso-Propyl-, Butyl- wie z. B. iso-Butyl oder tert.-Butyl-, Cyclohexyl-, Methoxy-, Ethoxy-, Phenyl-, Phenoxy-, Phenylmethoxy-oder Phenylethoxy- stehen oder die beiden Reste R⁷ zusammen einen Rest der Formel -O-CH₂-CH₂-O- oder einen Phenyl-1,2-dioxyrest bilden und
Y für ein Sauerstoffatom steht und
n gleich 1, 2, 3 oder 4 ist, wobei n besonders bevorzugt gleich 1 ist.

Insbesondere sind optisch aktive Liganden der Formel 1 bevorzugt, bei denen ein Enantiomer angereichert ist. Besonders bevorzugt sind Ligandsysteme, bei denen die Enantiomerenanreicherung 30 %, insbesondere 70 %, besonders bevorzugt 90 % übersteigt.

Die erfindungsgemäßen protonierten NN(R)P-Liganden Formel **1** können ausgehend von preiswerten und in der Literatur beschriebenen (z. B. a) H. Beyer, A. Hetzheim, Chem. Ber. 1964, 97, 1031-1036; b) K. Peters, E.-M. Peters, A. Hetzheim, T. Irrgang, Z. Kristallogr. NCS 2000, 215, 381-381; c) T. Irrgang, Dissertation 2000, Greifswald; d) D. Friedrich, Dissertation 2009, Bayreuth; e) T. Irrgang, D. Friedrich, R. Kempe, WO 2008/061663 A1) oder kommerziell erhältlichen Ausgangsmaterialien hergestellt werden.

Im Allgemeinen können die erfindungsgemäßen Liganden **1** durch Deprotonierung einer imidazo[1,5-*b*]pyridazin-substituierten Amino-Hydroxy-Verbindung I und einer anschließende Umsetzung mit einem Chlorphosphin erhalten werden. 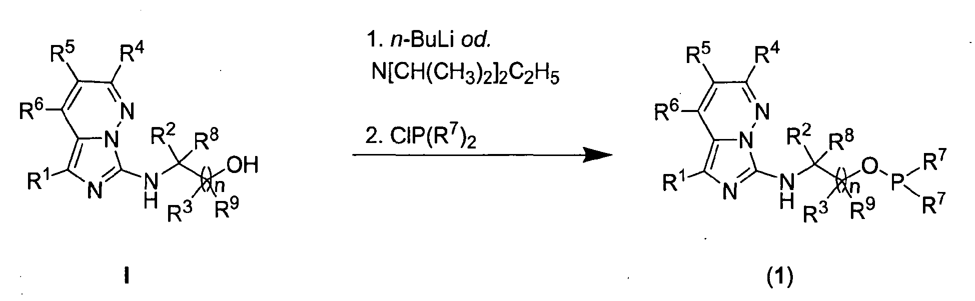 n, R¹ bis R⁹ haben dabei die oben genannte Bedeutung.

Im Falle das R² und R⁸ Wasserstoffsubstituenten sind und einer der beiden oder beide Reste R³ oder R⁹ keine Wasserstoffsubstituenten sind und die Reste nicht identisch sind, liegt das Chiralitätszentrum an dem Kohlenstoffatom, an dem die genannten Reste R³ und R⁹ gebunden sind. Stellen die Reste R³ und R⁹ Wasserstoffsubstituenten dar und ist einer der beiden oder sind beide Reste R² und R⁸ keine Wasserstoffsubstituenten und sind die Reste nicht identisch, liegt das Chiralitätszentrum an dem Kohlenstoffatom, an dem die genannten Reste R² und R⁸ gebunden sind.

Die erfindungsgemäßen NN(R)P-Liganden **1** können, in protonierter bzw. deprotonierter Form, eine Vielzahl von Metallen und Elementen des Periodensystems der Elemente (PSE), insbesondere die der Gruppen 8, 9, 10 und 11, koordinieren und mit ihnen Komplexverbindungen bzw. Katalysatorsysteme ergeben.

Ein weiterer Gegenstand der vorliegenden Erfindung sind daher bevorzugte Komplexverbindungen, der allgemeinen Formel **2**, 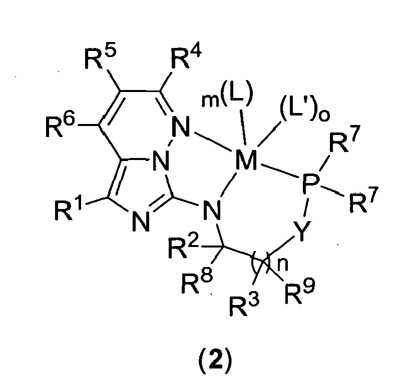 wobei
n, Y und die Substituenten R¹ bis R⁹ die oben genannte Bedeutung haben und
- m und o: unabhängig voneinander 0 oder 1 sein können, wobei bevorzugt m und o 1 sind, und

- M: für ein Metall, bevorzugt ein Übergangsmetall aus der Gruppe Ti, Cr, Fe, Co, Ni, Cu, Zr, Ru, Rh, Pd, Os, Ir und Pt steht, besonders bevorzugte Metalle sind Iridium und Rhodium, und
- L und L': unabhängig voneinander für einen einzähnigen Liganden oder L und L' zusammen für einen zweizähnigen Liganden stehen.

Beispiele für L und L' sind unter anderem Halogenid-Liganden, besonders Cl-, Br-und I-Liganden; Dien-Liganden, besonders Cyclopentadien, Cyclooctadien, Norbornadien; Olefin-Liganden, besonders Ethylen- und Cycloocten-Liganden, Acetato-; Trifluoracetato-; Acetylacetonato-; Allyl-; Methallyl-; Alkyl-Liganden; besonders Methyl- und Ethyl-Liganden; Nitril-Liganden, besonders Acetonitril- und Benzonitril-Liganden; Carbonyl- und Hydrido-Liganden; Phosphan-Liganden, beispielhaft Benzyldiphenylphosphan, t-Butyldicyclohexylphosphan, Tris(dimethylamido)phosphan, Cyclohexyldiphenylphosphan, Methyldiethoxyphosphan; sowie Phosphit-Liganden, beispielhaft Tri-isopropylphosphit, Trimethylphosphit, Tri-neo-pentylphosphit. L und L' stellen zusammengenommen besonders bevorzugt einen zweizähnigen Chelatliganden dar, insbesondere einen Cyclooctadien- oder Norbornadien-Liganden sowie Diphosphan-Liganden. Ausgewählte Beispiele für Diphosphan-Liganden sind 2,2'-Bis(di-*t-*butylphosphino)-1,1'-biphenyl, 1,3-Bis(di-*t*-butylphosphinomethyl)benzol, α,α'-Bis(di-*t*-butylphosphino)-o-xylol, 2,2'-Bis(dicyclohexylphosphino)-1,1'-biphenyl, 1,3-Bis(dicyclopentylphosphinomethyl)benzol, 1,2-Bis(diethylphosphino)ethan.

Die Komplexe **2** sind über zwei verschiedene Syntheserouten zugänglich. Zur Darstellung via Salzmetathese (Syntheseweg **A**) werden die Liganden **1** zunächst mit einer Base, bevorzugt in Gegenwart von Buthyllithium, deprotoniert und anschließend mit einem Metall, Metallvorkomplex oder Metallsalz in einem organischen Lösemittel zu den Komplexen **2** umgesetzt. Die Syntheseroute **B** beruht auf Eliminierung eines Alkohols, hierbei werden die Liganden **1** direkt mit einem entsprechenden Metallvorkomplex versetzt, was die direkte Generierung der Komplexe **2** erlaubt. Zusätzliche Aufreinigungsschritte entfallen, was die Katalyseverfahren stark vereinfacht, ohne die Aktivität oder Selektivität der Katalysen zu beeinflussen.

Beispiele für die Metallsalze sind z.B. Metallchloride, -bromide, -iodide, -cyanide, - nitrate, -acetate, -acetylacetonate, -hexafluoracetylacetonate, tetrafluoroborate, - perfluoracetate oder -triflate, insbesondere des Palladiums, Platins, Rhodiums, Rutheniums, Osmiums, Iridiums, Kobalts, des Nickels, des Eisens, des Kupfers, des Silbers und/oder des Golds.

Beispiele für die Metallvorkomplexe sind:
1,5-Hexadieniridiumchlorid oder -iodid, Cyclooctadieniridium(I)chlorid-Dimer, Bis(cycloocten)iridium(I)chlorid-Dimer, Cyclooctadieniridiumchlorid oder -iodid, Bis(ethylen)iridium(I)chlorid-Dimer, (Cyclooctadien)methoxyiridium(I) -Dimer,
(Cyclooctadien)hydroxyiridium(I) -Dimer, Cyclooctadienrhodium(I)chlorid-Dimer, Norbornadienrhodium(I)chlorid-Dimer, 1,5-Hexadienrhodium(I)chlorid-Dimer, Tris(triphenylphosphan)rhodium(I)chlorid, Bis(ethylen)rhodium(I)chlorid-Dimer,
(Cyclooctadien)methoxyrhodium(I) -Dimer, (Cyclooctadien)hydroxyrhodium(I) - Dimer, Hydridocarbonyltris(triphenylphosphan)rhodium(I)chlorid, Bis(cyclooctadien)rhodium(I)perchlorat,
Bis(cyclooctadien)rhodium(I)tetrafluorborat, Bis(cyclooctadien)rhodium(I)triflat, Bis(acetonitril)(cyclooctadien)rhodium(I)perchlorat, -tetrafluorborat, oder -triflat, Cyclopentadienrhodium(III)chlorid-Dimer, Cyclooctadienpalladiumiodid oder - chlorid, 1,5-Hexadienpalladiumchlorid oder -iodid,
Bis(dibenzylidenaceton)palladium, Bis(acetonitril)palladium(II)chlorid oder -bromid, Bis(benzonitril)palladium(II)chlorid, -bromid oder -iodid,
Cyclooctadienplatinchlorid oder -iodid, 1,5-Hexadienplatinchlorid oder -iodid, Bis(cyclooctadien)platin,
(Cydooctadien)Ru(η³-allyl)₂, ((Cyclooctadien)Ru)₂(acetat)₄,
((Cyclooctadien)Ru)₂(trifluoracetat)₄, RuCl₂(Aren)-Dimer,
Tris(triphenylphosphan)ruthenium(II)chlorid, Cyclooctadienruthenium(II)chlorid, OsCl₂(Aren)-Dimer,
Bis(cyclooctadien)nickel, (Cyclododecatrien)nickel, Tris(norbornen)nickel, Nickeltetracarbonyl, Nickel(II)acetylacetonat,
(Aren)kupfertriflat, (Aren)kupferperchlorat, (Aren)kupfertrifluoracetat, Kobaltcarbonyl.

Im Folgenden ist beispielhaft die Herstellung der erfindungsgemäßen NN(R)P-Ligand-stabilisierten Komplexkatalysatoren **2** aus einem Iridium- bzw. Rhodiumvorkomplex via Salzeliminierung (**A**) bzw. Alkoholeliminierung (**B**) gezeigt:

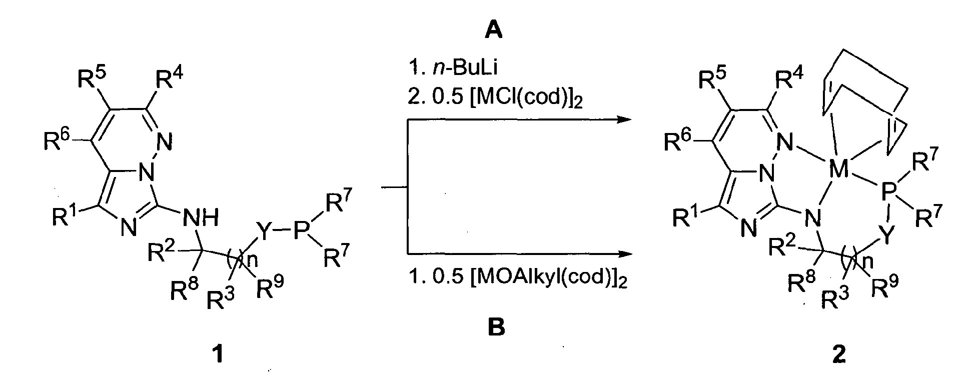

Katalysatoren, welche die erfindungsgemäßen Liganden enthalten, werden bevorzugt zusammen mit ausgewählten Additiven eingesetzt. Bevorzugte Additive sind Metallalkoxidverbindungen, wie z. B. Alkali- oder Erdalkalialkoxide, bevorzugt KO^{t}Bu, NaO^{t}Bu, LiO^{t}Bu oder Mg(OC₂H₅)₂, Alkali- oder Erdalkalimetallalkyl-, Allyl-und Aryl-Verbindungen, wie z. B. BuLi, MeLi oder *^{t}*BuLi, Alkali- oder Erdalkali-Phosphate, Carbonate oder Hydroxide, wie z.B. K₃PO₄, Na₃PO₄, K₂CO₃, Na₂CO₃ KOH, NaOH, Alkali- oder Erdalkalihydride oder -halogenide, insbesondere deren Fluoride, wie z.B. KH, NaH, KF oder NaF, Alkali- oder Erdalkali-Silyloxyverbindungen oder entsprechende Amidoverbindungen, wie z. B. Na-Amid, KOSiMe₃ oder KN(SiMe₃)₂, oder die Alkalimetalle selbst (wobei ^{t}Bu für tert.-Butyl, Bu für Butyl und Me für Methyl steht). Besonders bevorzugte Metallverbindungen sind in diesem Zusammenhang die entsprechenden Lithium-, Kalium- und Natriumverbindungen. Bevorzugt sind insbesondere deren Aryl-, Alkyl- und Allylverbindungen, deren Amidoverbindungen und deren Alkoholatverbindungen.

Komplexverbindungen der allgemeinen Formel **2** sind insbesondere in Kombination mit Metallalkoxidverbindungen hochaktive und selektive Katalysatoren, insbesondere für Hydrierungen, wie beispielsweise für die (enantioselektive) Reduktion von Ketonen und insbesondere von Iminen. Gegenüber den in WO 2008/061663 A1 beschriebenen Katalysatorsystemen können mit den erfindungsgemäßen Katalysatoren Imine mit deutlich verbesserter Selektivität und guten Ausbeuten hydriert werden. Durch die ungewöhnlich hohe Aktivität der Katalysatoren, die die beschriebenen Liganden enthalten, kann die Menge an eingesetztem Katalysator entsprechend verringert werden. Weiterhin sind mit den genannten Katalysatoren hohe Ausbeuten bei guter bis sehr guter Enantioselektivität zu beobachten.

Die erfindungsgemäßen Ligandensysteme besitzen eine Reihe technischer Vorteile, so sind sie einfach und preiswert zu synthetisieren. Die als Katalysator fungierenden Metallkomplexe können mit den beschriebenen chiralen Liganden ebenfalls einfach erzeugt werden. Die Liganden weisen eine große Substitutionsbreite auf, so dass die Katalysatoren auf bestimmte Eigenschaften, Funktionalitäten und Aktivitäten einfach, durch die Wahl entsprechender Substitutionsmuster eingestellt werden können. Weiterhin können so ebenfalls exzellent lösliche Katalysatorsysteme (z. B. in THF, Toluol, Benzol, CHCl₃, CH₂Cl₂, Alkoholen, Ketone, etc.) konstruiert werden, wodurch z. B. eine Diskriminierung von möglichen Substraten umgangen wird bzw. die Steuerung der Aktivitäten und Enantioselektivitäten über Lösungsmittel und Lösungsmittelgemische möglich ist. Unterschiedliche Edukte für eine enantioselektive Umsetzung, wie z. B. Ketone für die asymmetrische Hydrierung, können auch selbst als Lösungsmittel für den Katalysator dienen, so dass auf zusätzliche Lösungsmittel verzichtet werden kann.

Ein weiterer Gegenstand der vorliegenden Erfindung ist die Verwendung der beschriebenen Katalysatoren zur enantioselektiven Hydrierung von Ketonen und Iminen zur Herstellung entsprechender optisch aktiver Alkohole bzw. Amine. Dabei werden bevorzugt Katalysatoren der allgemeinen Formeln 2 in Verbindung mit einem der beschriebenen Katalysator-Additive eingesetzt. Weiterhin sind enantioselektive Hydrierverfahren zur Herstellung von Alkoholen aus Ketonen bzw. Aminen aus Iminen Gegenstand der vorliegenden Erfindung.

### Kurze Beschreibung der Figuren:

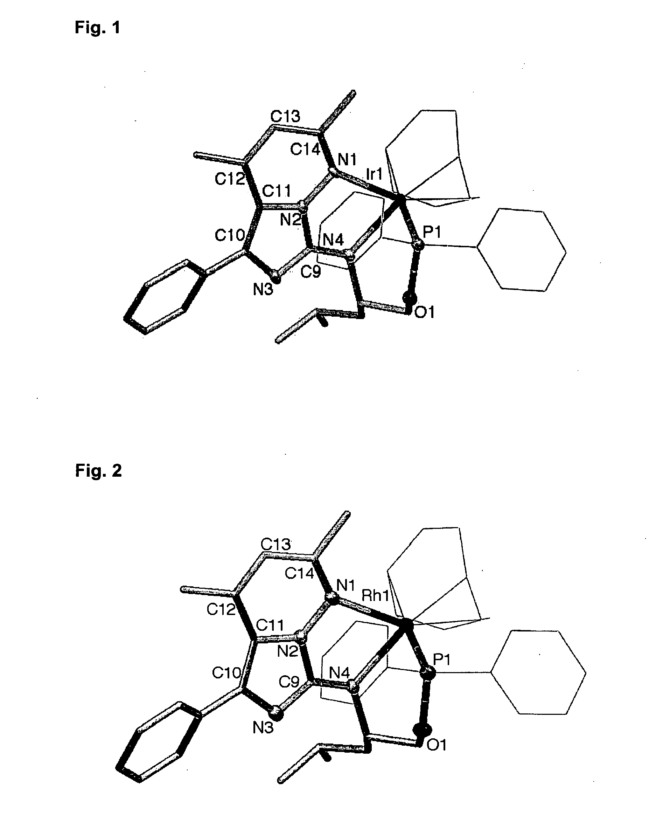

In Figur 1 ist beispielhaft die Molekülstruktur eines erfindungsgemäßen Iridium-Komplexes, ausgehend vom erfindungsgemäßen Liganden **1e** und [lrOCH₃(cod)]₂, abgebildet. Die Struktur wurde mittels Röntgeneinkristallstrukturanalyse ermittelt. Ausgewählte Bindungslängen [Å] und -winkel [°]: N1-Ir1 2.276(6), N1-N2 1.372(8), C9-N2 1.359(9), C9-N3 1.351(8), C9- N4 1.331(9), N4-Ir1 2.226(5); N1-Ir1-N4 74.8(2), N2-N1-Ir1 109.2(4), N2-C9-N4 119.3(6), N3-C9-N4 132.2(6), C9-N2-N1 121.8(6), C9-N4-lr1 113.1(4).

In Figur 2 ist beispielhaft die Molekülstruktur eines erfindungsgemäßen Rhodium-Komplexes (**2a**), ausgehend vom erfindungsgemäßen Liganden **1e** und [RhOCH₃(cod)]₂, abgebildet. Die Struktur wurde mittels Röntgeneinkristallstrukturanalyse ermittelt. Ausgewählte Bindungslängen [Å] und - winkel [°]: N1-Rh1 2.349(2), N1-N2 1.370(3), C9-N2 1.362(4), C9-N3 1.344(4), C9-N4 1.328(4), N4-Rh1 2.233(2); N1-Rh1-N4 74.02(8), N2-N1-Rh1 107.84(16), N2-C9-N4 119.8(3), N3-C9-N4 131.4(3), C9-N2-N1 122.4(2), C9-N4-Rh1 113.83(18).

### Ausführungsbeispiele:

Allgemeines:
Alle Reaktionen und Katalysen mit luftempfindlichen Verbindungen wurden unter Schutzgas (Stickstoff bzw. Argon) bei Verwendung der Schlenktechnik und
Handschuhboxen durchgeführt. Nichthalogenierte Lösungsmittel wurden über Natrium und Benzophenon und halogenierte Lösungsmittel über P₂O₅ unter Argon getrocknet und destilliert. Alle zur Synthese verwendeten Chemikalien sind kommerziell erhältlich und wurden ohne weitere Aufreinigungen verwendet. Die zur Katalyse verwendeten Flüssigsubstrate wurden zuvor über Molsieb und Argon und die verwendeten Feststoffsubstrate unter Vakuum getrocknet. Deuterierte NMR-Lösungsmittel wurden zuvor entgast, getrocknet, destilliert und in einer Handschuhbox gehandhabt.

Die NMR-Spektren wurden mit einem Bruker ARX 250 Spektrometer oder einem Varian Inova300 Spektrometer aufgenommen. Die chemische Verschiebung ist in ppm relativ zum deuterierten Lösungsmittel angegeben. Die Röntgeneinkristallstrukturanalysen wurden mit einem STOE-IPDS II, ausgerüstet mit einer Oxford Tieftemperatur-Einheit, bestimmt. Die Strukturauflösungen und - verfeinerungen wurden mit SIR97 (A. Altomare, et al., J. Appl. Crystallogr. 1999, 32, 115-119), SHELXL-97 (G.M. Sheldrick, *SHELX-97,* Institut für Anorganische Chemie der Universität, Göttingen, Germany, 1998) und WinGX (L.J. Farrugia, J. Appl. Crystallogr. 1999, 32, 837-838.) durchgeführt. Die Elementaranalysen wurden mit einem Vario elementar EL *III* bestimmt. Die gaschromatographischen Untersuchungen wurden mit einem Agilent 6890N Gaschromatographen, ausgestattet mit einer 7683 Einspritzeinheit und einem Probensammler sowie einer Macherey-Nagel Lipodex-E Kapillarsäule (25 m x 0.25 mm) oder einem Thermo Electron Cooperation Focus GC mit AS3000 Probensammler sowie einer Varian Chirasil-DEX Kapillarsäule (30 m x 0.25 mm) durchgeführt. Zur Bestimmung des Umsatzes wurde Dodecan als Standard verwendet. Der Enantiomerenüberschuss der Amine wurde via Hochleistungsflüssigkeitschromatographie mit einem Agilent 1200 über eine Chiralpak-IB Säule von Daicel ermittelt. Die Katalysen/Druckexperimente wurden in Autoklaven N-MT5 (Mehrfach-Test-Reaktoren) von Parr Instrument durchgeführt.

### Ausführungsbeispiele zu Ligandensynthesen:

Die von uns in den Katalysatorsystemen eingesetzten Steuerliganden sind sehr einfach, ausgehend von sehr preiswerten chiralen Bausteinen, darzustellen.

### Beispiel 1a: (2,4-Dimethyl-5-phenyl-imidazo[1,5-b]pyridazin-7-yl)-[1-(düsopropyl-phosphin-2-yloxymethyl)-3-methyl-butyl]-amin

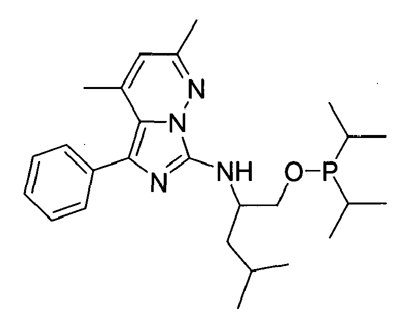

1,00 g (2,95 mmol) 2-(2,4-Dimethyl-5-phenyl-imidazo[1,5-b]pyridazin-7-ylamino)-4-methyl-pentan-1-ol werden im Vakuum getrocknet und anschließend in 30 mL Ether/THF (1:1) gelöst. Die orange Lösung wird auf -78 °C gekühlt und bei dieser Temperatur mit 1,84 mL (2,95 mmol) *n*-BuLi (1,6 M in *n*-Hexan) mit einer Spritze vorsichtig versetzt. Nach vollständiger Zugabe erhält man eine orange-braune Reaktionslösung, welche man eine weitere halbe Stunde bei tiefer Temperatur rührt und dann langsam auf RT erwärmen lässt. Zu dieser Lösung wird eine Lösung von 0,47 mL (2,95 mmol) Chlordiisopropylphosphin zugegeben. Die klare orange Reaktionslösung wird 12 h bei RT gerührt und anschließend entfernt man im Vakuum das Lösungsmittel. Der erhaltene schleimige/klebrige Rückstand wird 3 x mit 20 mL Ether extrahiert. Die vereinigten Filtrate werden bis zur Trockne eingeengt und man erhält ein zähes/klebriges orange-rotes Produkt. Ausbeute: 1,19 g (89 %), Schmp.: klebrig bei RT, C₂₆H₃₉N₄OP (454,59), ¹H-NMR (299,83 MHz, C₆D₆, 298 K): δ = 7.47-7.45 (d, 2H, C₆H₅, J= 8.40 Hz); 6.99-6.94 (t, 2H, C₆H₅, J= 7.80 Hz); 6.86-6.83 (m, 1H, C₆H₅); 5.01-5.01 (d, 1H, H-3, Imidazopyridazin, ⁴*J*_{H,H}= 0.60 Hz); 4.81-4.77 (d, 1H, NH, *J* = 9.3 Hz); 4.29-4.25 (m, 1H, HN-CH); 3.76-3.58 (m, 2H, C*H*₂-O); 1.72 (s, 3H, CH₃-(C-2)); 1.59 (s, 3H, CH₃-(C-4)); 1.33-1.22 (m, 5H, P(C*H*(CH₃)₂)₂/C*H*₂-C*H*-(CH₃)₂); 0.91-0.80 (m, 6H, (CH₃)₂); 0.73-0.60 (m, 12H, P(CH(C*H*₃)₂)₂) ppm. ³¹P-NMR (121,37 MHz, CDCI₃, 298 K): δ = 152.61 ppm.

### Beispiel 1b: (2,4-Dimethyl-5-phenyl-imidazo[1,5-b]pyridazin-7-yl)-[1-(diethyl-phosphin-2-yloxymethyl)-3-methyl-iso-butyl]-amin

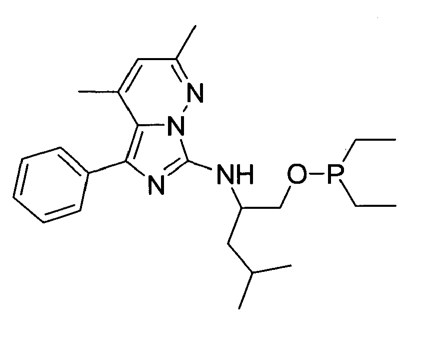

1,00 g (2,95 mmol) 2-(2,4-Dimethyl-5-phenyl-imidazo[1,5-*b*]pyridazin-7-ylamino)-4-methyl-pentan-1-ol werden in 30 mL Ether und 5 mL THF gelöst. Bei -78°C gibt man zu der orangen Lösung 1,84 mL (2,95 mmol) *n*-BuLi (1,6 M in *n*-Hexan). Die orange-braune Reaktionslösung wird 30 min bei -78°C gerührt, anschließend lässt man langsam erwärmen. Bei 0°C werden 0,36 ml (0,37g; 2,95 mmol) Diethylchlorophosphin zugegeben, hierbei klart die Lösung sofort auf. Die rote Reaktionslösung wird 16h bei Raumtemperatur gerührt, anschließend bis zur Trockne eingeengt und der Rückstand zweimal mit 15 mL Ether extrahiert. Die vereinigten Filtrate werden eingeengt, man erhält ein schleimiges, oranges Produkt. Ausbeute: 1,09 g (86%), Schmp.: klebrig bei RT. EA [%]: C₂₄H₃₅N₄OPx 0,5 THF (462,59), gef.: C 67.35, H 7.84, N 12.31; ber.: C 67.51, H 8.48, N 12.19; ¹H-NMR (299,83 MHz, C₆D₆, 298 K): δ = 7.74-7.71 (m, 2H, Hₒ, C₆H₅); 7.25-7.08 (m, 3H, H_{m,p} C₆H₅); 5.26-5.25 (d, 1H, H-3, *J*= 0.90 Hz, Imidazopyridazin); 5.04-5.01 (d, 1H, NH, *J* = 0.90 Hz); 4.55-4.50 (m, 1H, CH-NH); 3.94-3.78 (m, 2H, C*H*₂-OH); 1.96 (s, 3H, CH₃-C-2); 1.85-1.846 (d, 3H, CH₃-C-4, *J* = 0.90 Hz); 1.66-1.42 (m, 3H, C*H*₂C*H*-(CH₃)₂); 1.33-1.21 (m, 4H, P(C*H*ᵣCH₃)₂): 1.06-0.85 (m, 12H, CH-(C*H*₃)₂, P(CH₂-C*H*₃)₂) ppm. ³¹P-NMR (121,37 MHz, C₆D₆, 298 K): δ = 138.69 ppm.

### Beispiel 1c: (2,4-Dimethyl-5-phenyl-imidazo[1,5-b]pyridazin-7-yl)-[1-(di-^{t}butylphosphin-2-yloxymethyl)-3-methyl-butyl]-amin

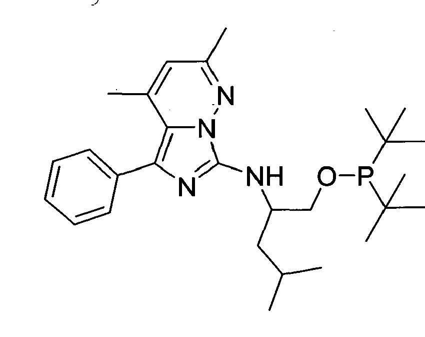

0,50 g (1,48 mmol) 2-(2,4-Dimethyl-5-phenyl-imidazo[1,5-*b*]pyridazin-7-ylamino)-4-methyl-pentan-1-ol werden in 30 mL Ether/THF (1:1) gelöst. Die orange Lösung wird auf -78°C gekühlt und bei dieser Temperatur mit 0,92 mL (1,48 mmol) n-BuLi (1,6 M in *n*-Hexan) mit einer Spritze vorsichtig versetzt. Nach vollständiger Zugabe erhält man eine orange-braune Reaktionslösung, welche man eine weitere halbe Stunde bei tiefer Temperatur rührt und dann langsam auf RT erwärmen lässt. Zu dieser Lösung werden 0,28 mL (1,48 mmol) Chlordi-*^{t}*butylphosphin zugegeben. Die klare orange Reaktionslösung wird 72 h bei RT gerührt und anschließend entfernt man im Vakuum das Lösungsmittel. Der erhaltene schleimige/klebrige Rückstand wird 3 x mit 20 mL Ether extrahiert. Die vereinigten Filtrate werden bis zur Trockne eingeengt und man erhält ein zähes/klebriges orange-rotes Produkt. Ausbeute: 0,47 g (66%), Schmp.: klebrig bei RT. C₂₈H₄₃N₄OP (482,64), ¹H-NMR (299,83 MHz, CDCl₃, 298 K): δ = 7.48-7.45 (d, 2H, Cₒ C₆H₅, *J*= 1.5 Hz); 7.32-7.29 (t, 2H, Cₘ C₆H₅, *J*= 7.2 Hz); 7.23-7.19 (m, 1H, Cₚ C₆H₅); 5.81 (s, 1H, H-3 Imidazopyridazin); 4.87-4.84 (d, 1H, NH, *J*= 9.9 Hz); 4.22-4.20 (m, 1H, C*H*-NH); 3.91-3.69 (m, 2H, C*H*₂-O); 2.23 (s, 3H, CH₃ Imidazopyridazin); 2.10 (s, 3H, CH₃ Imidazopyridazin); 1.81-1.74 (m, 1H, C*H*(CH₃)₂); 1.69-1.47 (m, 2H, CHC*H*₂CH); 1.17-1.13 (d, 3H, CH(C*H*₃)₂, *J*= 12.0 Hz); 1.04-1.01 (d, 3H, CH(C*H*₃)₂, *J*= 11.4 Hz); 0.95-0.90 (m, 18H, 2x C(C*H*₃)₃) ppm. ³¹P-NMR (121,37 MHz,CDCl₃, 298 K): δ = 157.29 ppm.

### Beispiel 1d: (2,4-Dimethyl-5-phenyl-imidazo[1,5-b]pyridazin-7-yl)-[1-(dicyclohexyl-phosphin-2-yloxymethyl)-3-methyl-iso-butyl]-amin

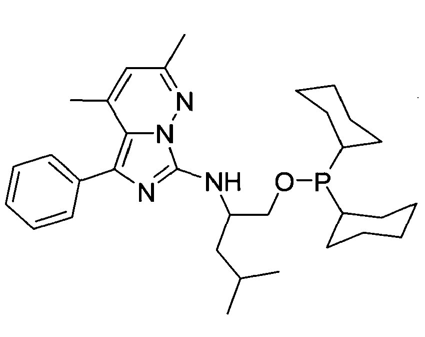

0,77 g (2,30 mmol) 2-(2,4-Dimethyl-5-phenyl-imidazo[1,5-*b*]pyridazin-7-ylamino)-4-methyl-pentan-1-ol werden in 30 mL Ether/THF (1:1) gelöst. Die orange Lösung wird auf -78°C gekühlt und bei dieser Temperatur mit 1,44 mL (2,30 mmol) *n*-BuLi (1,6 M in *n*-Hexan) mit einer Spritze vorsichtig versetzt. Nach vollständiger Zugabe erhält man eine orange-braune Reaktionslösung, welche man eine weitere halbe Stunde bei tiefer Temperatur rührt und dann langsam auf RT erwärmen lässt. Zu dieser Lösung werden 0,51 mL (2,30 mmol) Chlordicyclohexylphosphin zugegeben. Die klare orange Reaktionslösung wird 12 h bei RT gerührt und anschließend entfernt man im Vakuum das Lösungsmittel. Der erhaltene schleimige/klebrige Rückstand wird 3 x mit 20 mL Ether extrahiert. Die vereinigten Filtrate werden bis zur Trockne eingeengt und man erhält einen zähen orangen Feststoff. Ausbeute: 1,06 g (86%). C₃₂H₄₇N₄OP (534,72); ¹H-NMR (299,83 MHz, C₆D₆, 298 K): δ = 7.75-7.73 (m, 2H, Hₒ, C₆H₅); 7.26-6.07 (m, 3H, C₆H₅); 5.30 (s, 1H, H-3, *J*= 1.20 Hz, Imidazopyridazin) 5.09-5.06 (d, 1H, NH, *J*= 9.60 Hz); 4.58-4.53 (m, 1H, C*H*-NH); 4.06-3.81 (m, 2H, C*H*₂₋OH); 2.01 (s, 3H, CH₃-C-2); 1.88-1.87 (d, 3H, CH₃-C-4; *J* = 1.20 Hz); 1.72-1.50 (m, 15H, C*H*₂-C*H*-(CH₃)₂ / Cyclohexyl); 1.29-1.12 (m, 10H, Cyclohexyl); 0.99-0.97 (d, 3H, CH-(C*H*₃)₂, *J*= 6.30 Hz); 0.89-0.87 (d, 3H, CH-(C*H*₃)₂, *J*= 6.60 Hz) ppm. ³¹P-NMR (121,37 MHz, C₆D₆, 298 K): δ=147.73 ppm.

### Beispiel 1e: (2,4-Dimethyl-5-phenyl-imidazo[1,5-b]pyridazin-7-yl)-[1-(diphenyl-phosphin-2-yloxymethyl)-3-methyl-butyl]-amin

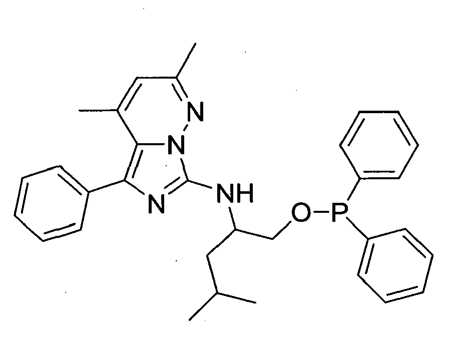

0,87 g (2,57 mmol) 2-(2,4-Dimethyl-5-phenyl-imidazo[1,5-b]pyridazin-7-ylamino)-4-methyl-pentan-1-ol werden in 30 mL Ether/THF (1:1) gelöst. Die orange Lösung wird auf -78°C gekühlt und bei dieser Temperatur mit 1,61 mL (2,57 mmol) n-BuLi (1,6 M in n-Hexan) mit einer Spritze vorsichtig versetzt. Nach vollständiger Zugabe erhält man eine orange-braune Reaktionslösung, welche man eine weitere halbe Stunde bei tiefer Temperatur rührt und dann langsam auf RT erwärmen lässt. Zu dieser Lösung wird eine Lösung von 0,48 mL (2,57 mmol) Chlordiphenylphosphin in 10 mL Ether zugegeben. Die klare rote Reaktionslösung wird 12 h bei RT gerührt und anschließend entfernt man im Vakuum das Lösungsmittel. Der erhaltene schleimige/klebrige Rückstand wird 3 x mit 20 mL Ether extrahiert. Die vereinigten Filtrate werden bis zur Trockne eingeengt und man erhält ein zähes/klebriges orange-rotes Produkt. Ausbeute: 0,78 g (58 %), Schmp.: klebrig bei RT. EA [%]: C₃₂H₃₅N₄OP x THF (522,62) gef.: C 72.56, H 7.73, N 9.18, ber.: C 72.70, H 7.29, N 9.42. ¹H-NMR (250,13 MHz, CD₂Cl₂, 298 K): δ = 7.50-7.25(m, 15H, 3xC₆H₅), 5.95-5.94(d, *J* = 1.2 Hz, 1H, H-3, Imidazopyridazin); 4.84-4.81 (d, *J* = 9.5 Hz , 1H, NH); 4.40-4.28(m, 1H, N-C*H*); 4.11-3.93(m, 2H, C*H*₂-O); 2.31(s, 3H, C*H*₃-(C-2)); 2.20-2.19(d, *J* = 1.1 Hz, 3H, C*H*₃-(C-4)); 1.85-1.48(m, 3H, C*H*₂-C*H-*(CH₃)₂); 0.98-0.95(dd, *J* = 1.4, 6.6 Hz, 6H, (CH₃)₂) ppm. ³¹P-NMR (101,26 MHz, CD₂Cl₂, 298 K): ö = 113.19 ppm.

### Beispiel 1f: (2,4-Dimethyl-5-phenyl-imidazo[1,5-b]pyridazin-7-yl)-[1-(diisopropyl-phosphin-2-yloxymethyl)-3-methyl-methyl]-amin

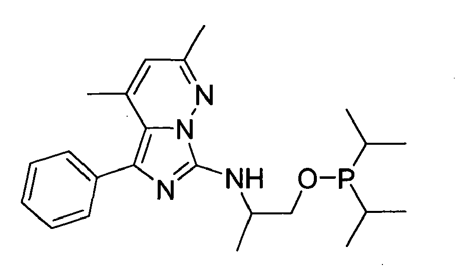

1,00 g (3,37 mmol) 2-(2,4-Dimethyl-5-phenyl-imidazo[1,5-*b*]pyridazin-7-ylamino)-propan-1-ol werden in 40 mL THF gelöst. Bei -78°C gibt man zu der orangen Lösung 2,10 mL (3,37 mmol) *n*-BuLi (1,6 M in *n*-Hexan). Die orange-braune Reaktionslösung wird 30 min bei -78°C gerührt, anschließend lässt man langsam erwärmen. Bei etwa 0°C werden 0,53 mL (0,51 g; 3,37 mmol) Diisopropylchlorophosphin zugegeben, hierbei klart die Lösung sofort auf. Die rote Reaktionslösung wird 16h bei Raumtemperatur gerührt, anschließend wird die Lösung bis zur Trockne eingeengt und der Rückstand zweimal mit 15 mL Ether extrahiert. Die vereinigten Filtrate werden eingeengt, man erhält ein schleimiges, oranges Produkt. Ausbeute1,17 g (84%), Schmp.: klebrig bei RT. EA [%]: C₂₃H₃₃N₄OP x C₂H₅O (412,51). gef.: C 66.83, H 8.98, N 11.89, ber.: C 66.64, H 8.91, N 11.51. ¹H-NMR (299,83 MHz, C₆D₆, 298 K): δ = 7.57-7.54 (d, 2H, Hₒ, C₆H₅); 7.41-7.27 (m, 3H, H_{m,p,} C₆H₅); 5.91-5.91 (d, 1H, H-3, Imidazopyridazin, ⁴*J*_{H,H}= 0.90 Hz); 5.02-4.99 (d, 1H, NH, *J* = 8.70 Hz); 4.33-4.28 (m, 1H, C*H*-NH); 3.93-3.78 (m, 2H, C*H*₂-OH); 2.32 (s, 3H, C*H*₃-C-2); 2.19-2.18 (d, 3H, C*H*₃-C-4, ⁴*J*_{H,H}= 0.90 Hz); 1.81-1.70 (m, 2H, P(C*H*-(CH₃)₂)₂); 1.41-1.39 (d, 3H, CH-C*H*₃, *J*= 6.60 Hz);); 1.16-1.01 (m, 12H, 2 x CH-(C*H*₃)₂) ppm. ³¹P-NMR (121,37 MHz, C₆D₆, 298 K): δ = 153.42 ppm.

### Beispiel 1g: (2,4-Dimethyl-5-phenyl-imidazo[1,5-b]pyridazin-7-yl)-[1-(diisopropylphosphin-2-yloxymethyl)-3-methyl-benzyl]-amin

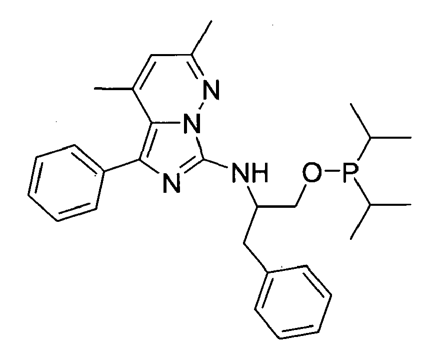

0,60 g (1,61 mmol) 2-(2,4-Dimethyl-5-phenyl-imidazo[1,5-b]pyridazin-7-ylamino)-3-phenyl-propan-1-ol werden in 30 mL Ether und 5 mL THF gelöst. Bei -78°C gibt man zu der orangen Lösung vorsichtig 1,00 mL (1,61 mmol) n-BuLi (1,6 M in n-Hexan). Die orange-braune Reaktionslösung wird 30 min bei -78°C gerührt, anschließend lässt man langsam erwärmen. Bei 0°C werden 0,26 mL (0,25 g; 1,61 mmol) Diisopropyl-chlorophosphin zugegeben, hierbei klart die Lösung sofort auf. Die rote Reaktionslösung wird 16h bei Raumtemperatur gerührt, anschließend wird die Lösung bis zur Trockne eingeengt und der Rückstand zweimal mit 15 mL Ether extrahiert. Die vereinigten Filtrate werden eingeengt, man erhält ein schleimiges, oranges Produkt. Ausbeute: 0,71 g (90%), Schmp.: klebrig bei RT. C₂₉H₃₇N₄OP (488,60); ¹H-NMR (299,83 MHz, C₆D₆, 298 K): δ = 7.74-7.71 (m, 2H, Hₒ, C₆H₅); 7.31-6.97 (m, 8H, C₆H₅); 5.32-5.30 (d, 1H, NH, *J* = 7.80 Hz) 5.32-5.30 (s, 1H, H-3, *J* = 1.20 Hz, Imidazopyridazin); 4.65-4.63 (m, 1H, C*H*-NH); 3.92-3.85 (m, 2H, C*H*₂-C₆H₅); 3.29-3.01 (m, 2H, C*H*₂-OH); 1.96-1.95 (d, 3H, CH₃-C-4, *J* = 1.20 Hz); 1.84 (s, 3H, CH₃-C-2); 1.69-1.60 (m, 2H, P(C*H*-(CH₃)₂)₂); 1.24-0.91 (m, 12H, P(CH-(C*H*₃)₂)₂) ppm. ³¹P-NMR (121,37 MHz, C₆D₆, 298 K): δ = 152.39 ppm.

### Beispiel 1h: (2,4-Dimethyl-5-phenyl-imidazo[1,5-b]pyridazin-7-yl)-[1-([1,3,2]dioxaphospholan-2-yloxymethyl)-3-methyl-butyl]-amine

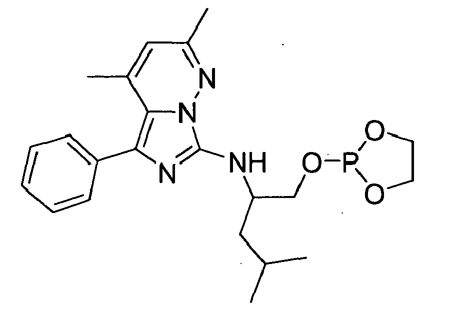

0,57 g (1,68 mmol) 2-(2,4-Dimethyl-5-phenyl-imidazo[1,5-b]pyridazin-7-ylamino)-4-methyl-pentan-1-ol werden im Vakuum getrocknet und anschließend in 30 mL Ether/THF (5:1) gelöst. Die orange Lösung wird auf -78°C gekühlt und bei dieser Temperatur mit 1,05 mL (1.68 mmol) *n*-BuLi (1,6 M in *n*-Hexan) mit einer Spritze vorsichtig versetzt. Nach vollständiger Zugabe erhält man eine orange-braune Reaktionslösung, welche man eine weitere halbe Stunde bei tiefer Temperatur rührt und dann langsam auf RT erwärmen lässt. Zu dieser Lösung werden 0,15 mL (1,68 mmol) 2-Chlor-1,3,2-dioxaphospholan zugegeben. Die klare orange Reaktionslösung wird 12 h bei RT gerührt und anschließend entfernt man im Vakuum das Lösungsmittel. Der erhaltene schleimige/klebrige Rückstand wird 3 x mit 20 mL Ether extrahiert. Die vereinigten Filtrate werden bis zur Trockne eingeengt und man erhält ein zähes/klebriges orange-rotes Produkt. Ausbeute: 0,58 g (81 %), Schmp.: klebrig bei RT. C₂₂H₂₉N₄O₃P (428,48); ¹H-NMR (250,13 MHz, CD₂Cl₂, 298K): δ = 7.47-7.43(m, 2H, Hₒ, C₆H₅), 7.34-7.22(m, 3H, H_{m,p} C₆H₅), 5.89-5.88(d, *J* = 1.2 Hz, 1H, H-3, Imidazopyridazin); 4.86(bs, 1H, NH); 4.25-3.76(m, 11H, THF/N-C*H*-C*H*₂-O/O-C*H*₂-C*H*₂-O); 2.25(s, 3H, C*H*₃-(C-2)); 2.10-2.09(d, *J* = 1.1 Hz, 3H, C*H*₃-(C-4)); 1.62-1.36(m, 7H, THF/C*H*₂-C*H*-(CH₃)₂); 0.88-0.84(dd, *J* = 3.2 Hz, 6H, (CH₃)₂) ppm. ³¹P-NMR (101,26 MHz, CD₂Cl₂, 298 K): δ = 132.92 ppm.

### Ausführungsbeispiel zur Komplexsynthese:

Aus den effizient herzustellenden Liganden können die als Hauptkomponente des Katalysatorsystems wirkenden Metallkomplexe (hier das Beispiel Iridium und Rhodium, jedoch erweiterbar auf alle Metalle und eine Vielzahl von Elementen des Periodensystems der Elemente (PSE)) synthetisiert (vorzugsweise direkte Generierung) werden.

### Beispiel 2a: 1,5-Cyclooctadien-{(2,4-dimethyl-5-phenyl-imidazo[1,5-b]pyridazin-7-yl)-[1-(diphenylphosphin-2-yloxymethyl)-3-methyl-butyl]-amiclo}-rhodium (I)

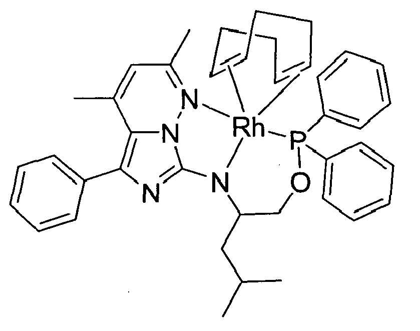

Eine Lösung von 0,50 g (0,96 mmol) **1e** in 15 mL THF wird mit 0,23 g (0,47 mmol) 1,5-Cyclooctadien-methoxy-rhodium (I) dimer versetzt, wobei ein sofortiger Farbumschlag nach dunkelblau/grün eintritt. Die Reaktionslösung wird 16 h bei RT gerührt. Anschließend engt man bis zur Hälfte ein und bei -30°C erhält man ein dunkelblaues kristallines Produkt. Ausbeute: 0,26 g (37 %). EA [%]: C₄₀H₄₆N₄OPRh (732,70) x CH₃OH gef.: C 64.41, H 6.71, N 7.30; ber.: C 64.39, H 6.59, N 7.33. ¹H-NMR (299,83 MHz, CD₂Cl₂, 298 K): δ = 7.62-7.56 (m, 2H, 3 x C₆H₅); 7.40-7.30 (m, 7H, 3 x C₆H₅); 7.26-7.15 (m, 3H, 3 x C₆H₅), 7.03-6.95 (m, 3H, 3 x C₆H₅); 5.81 (bs, 1H, cod); 5.52 (s, 1H, H-3, lmidazopyridazin); 4.92 (bs, 1H, cod); 4.77-4.61 (m, 2H, CH₂O); 4.33-4.26 (m, 1H, CH); 2.81 (s, 3H, CH₃-Imidazopyridazin); 2.65-1.84 (m, 10H, cod); 1.83-1.39 (m, 3H, C*H*ᵣC*H*(CH₃)₂); 1.36 (s, 3H, CH₃-Imidazopyridazin); 1.23-1.22 (d, 3H, CH(C*H*₃)₂, *J*= 6.6 Hz); 1.07-1.05 (d, 3H, CH(C*H*₃)₂, *J*= 6.6 Hz) ppm. ³¹P-NMR (121,37 MHz, CD₂Cl₂): δ = 112.94; 111.64; *J*= 158.40 Hz; ppm.

### Hydrierungsbeispiele:

Allgemeine Angaben:
Die Ansatzgröße betrug in der Regel 0,602 mmol (Imine) und 2,608 mmol (Ketone). Um ungenaue Einwaagen kleinster Substanzmengen zu vermeiden,
wurden Stammlösungen der Feststoffsubstrate unter inerten Bedingungen (Handschuhbox / N₂) angefertigt. Die Katalysatorstammlösungen wurden über Alkoholeliminierung in THF nach der bereits beschriebenen Methodik hergestellt.
Alle Operationen wurden unter striktem Ausschluss von Sauerstoff und
Feuchtigkeit in einer Handschuhbox durchgeführt. Bei der Vorbereitung der Katalysen wurde eine bestimmte Zugabereihenfolge eingehalten. Die Katalysen wurden bis auf einige Voroptimierungen meist mehrfach (2-4-mal) durchgeführt.

Die jeweiligen Ansätze werden in der Handschuhbox in die Probenröhrchen pipettiert und in den Autoklaven gefüllt. Die Zugabe der Additive erfolgt hierbei im Überschuss. Der Autoklav wird an die Hydrierapparatur angeschlossen, 10-15-mal mit 5-10 bar H₂ gespült und dann wird der jeweilige Wasserstoffdruck aufgepresst. Alle Hydrierexperimente erfolgten bei konstantem Wasserstoffpartialdruck, konstanter Temperatur und unter Rühren. Durch Ablassen des Wasserstoffs wird die Hydrierung nach den entsprechenden Reaktionszeiten abgebrochen und die Proben mit der jeweiligen Menge an Dodecan als interner Standard versetzt. Zur Aufarbeitung werden die Reaktionsansätze zunächst mit H₂O versetzt und anschließend mit Ether extrahiert. Die Proben werden mittels GC bzw. HPLC analysiert.

Angaben zur katalytischen Aktivität und Selektivität:
Die Katalysatorsysteme zeigen sehr gute Enantioselektivitäten in asymmetrischen Katalysen wie beispielsweise der Hydrierung von Ketonen und Iminen.
Die Katalysatorsysteme erreichen ihre Effizienz bevorzugt unter Zugabe von Metallalkoxiden, wie beispielsweise KO*^{t}*Bu (Bu = C₄H₉). Neben dem angeführten

Beispiel KO*^{t}*Bu wirken auch andere Metallsalze Effizienz steigernd.

### Beispiel 3a: Hydrierung von N-Phenyl(phenylethyliden)amin

**Tabelle 1. Hydrierung von N-Phenyl(phenylethyliden)amin mit 1h/[lrOCH₃(cod)]₂**

| Bsp. **3a** | Kat | LM | Additiv | T | t | Umsatz | ee |
|---|---|---|---|---|---|---|---|
| Nr. | [mol %] | | | [°C] | [h] | [%] | [%] |
| 01 | 0,1 | THF | ohne | 40 | 24 | 58 | 7 |
| 02 | 0,1 | THF | KO*^{t}*Bu | 40 | 24 | 98 | 30 |

| | | | | | | | |
|---|---|---|---|---|---|---|---|
| 60 bar H₂-Druck; Katalysator wurde nach Syntheseweg **B** direkt generiert | | | | | | | |

**Tabelle 2. Hydrierung von N-Phenyl(phenylethyliden)amin mit 2a**

| Bsp. **3a** | Kat | LM | Additiv | T | t | Umsatz | ee |
|---|---|---|---|---|---|---|---|
| Nr. | [mol %] | | | [°C] | [h] | [%] | [%] |
| 01 | 0,1 | THF | KO*^{t}*Bu | 20 | 24 | 63 | 84 |

| | | | | | | | |
|---|---|---|---|---|---|---|---|
| 20 bar H₂-Druck; Katalysator wurde nach Syntheseweg B hergestellt | | | | | | | |

**Tabelle 3. Hydrierung von N-Phenyl(phenylethyliden)amin mit 1a/[RhOCH₃(cod)]₂**

| Bsp. **3a** | Kat | LM | Additiv | T | t | Umsatz | ee |
|---|---|---|---|---|---|---|---|
| Nr. | [mol %] | | | [°C] | [h] | [%] | [%] |
| 01 | 0,1 | THF | ohne | 40 | 24 | 0 | 0 |
| 02 | 0,1 | THF | KO*^{t}*Bu | 40 | 24 | >99 | 82 |

| | | | | | | | |
|---|---|---|---|---|---|---|---|
| 60 bar H₂-Druck; Katalysator wurde nach Syntheseweg B direkt generiert | | | | | | | |

**Tabelle 4. Hydrierung von N-Phenyl(phenylethyliden)amin mit 1a/[RhOCH₃(cod)]₂**

| Bsp. **3a** | Kat | LM | Additiv | T | t | Umsatz | ee |
|---|---|---|---|---|---|---|---|
| Nr. | [mol %] | | | [°C] | [h] | [%] | [%] |
| 01 | 0,1 | THF | KO*^{t}*Bu | 40 | 24 | >99 | 82 |
| 02 | 0,1 | THF | KO*^{t}*Bu | 20 | 24 | >99 | 91 |
| 03 | 0,1 | THF | KO*^{t}*Bu | 10 | 48 | 98 | 91 |
| 04 | 0,1 | THF | KO*^{t}*Bu | 0 | 48 | 92 | 93 |
| 05 | 0,1 | THF | KO*^{t}*Bu | -20 | 48 | 64 | 95 |

| | | | | | | | |
|---|---|---|---|---|---|---|---|
| 20 bar H₂-Druck; Katalysator wurde nach Syntheseweg B direkt generiert | | | | | | | |

**Tabelle 5. Hydrierung von N-Phenyl(phenylethyliden)amin mit 1a/[RhOCH₃(cod)]₂**

| Bsp. **3a** | Kat | LM | Additiv | T | t | Umsatz | ee |
|---|---|---|---|---|---|---|---|
| Nr. | [mol%] | | | [°C] | [h] | [%] | [%] |
| 01 | 0,1 | THF | ohne | 20 | 48 | 37 | 0 |
| 02 | 0,1 | THF | KO*^{t}*Bu | 20 | 48 | >99 | 89 |
| 03 | 0,1 | THF | LiO*^{t}*Bu | 20 | 48 | 34 | 43 |
| 04 | 0,1 | THF | NaO*^{t}*Bu | 20 | 48 | 44 | 80 |
| 05 | 0,1 | THF | KOH | 20 | 48 | >99 | 90 |
| 06 | 0,1 | THF | KN(SiCH₃)₂ | 20 | 48 | 96 | 86 |
| 07 | 0,1 | THF | KOSiCH₃ | 20 | 48 | 38 | 31 |
| 08 | 0,1 | THF | K₂CO₃ | 20 | 48 | 27 | 86 |
| 09 | 0,1 | THF | Na-Amid | 20 | 48 | 25 | 66 |
| 10 | 0,1 | THF | N[CH(CH₃)₂]₂C₂H₅ | 20 | 48 | 0 | 0 |

| | | | | | | | |
|---|---|---|---|---|---|---|---|
| 20 bar H₂-Druck; Katalysator wurde nach Syntheseweg **B** direkt generiert | | | | | | | |

### Beispiel 3b: Hydrierung von N-Aryl-Iminen

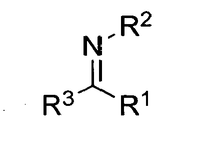

**Tabelle 6. Hydrierung von Iminen mit 1a/[RhOCH₃(cod)]₂**

| Bsp. **3b** | Kat | R¹ | R² | R³ | Umsatz | ee |
|---|---|---|---|---|---|---|
| Nr. | [mol %] | | | | [%] | [%] |
| 01 | 0,1 | CH₃ | C₆H₅ | 3,4-(OCH₃)₂-C₆H₃ | 78 | 89 |
| 02 | 0,2 | CH₃ | C₆H₅ | 4-Br-C₆H₄ | 35 | 97 |
| 03 | 0,1 | CH₃ | C₆H₅ | 4-CH₃-C₆H₄ | 97 | 86 |
| 04 | 0,2 | CH₃ | C₆H₅ | Naphtyl | >99 | 89 |
| 05 | 0,1 | C₂H₅ | C₆H₅ | C₆H₅ | >99 | 76 |
| 06* | 0,2 | C₅H₁₁ | C₆H₅ | C₆H₅ | >99 | 74 |
| 07 | 0,1 | C(CH₃)₃ | C₆H₅ | C₆H₅ | >99 | 57 |
| 08 | 0,1 | CH₃ | 4-OCH₃-C₆H₄ | C₆H₅ | >99 | 82 |
| 09 | 0,1 | CH₃ | 3-CH₃-C₆H₄ | C₆H₅ | >99 | 89 |
| 10* | 0,2 | CH₃ | 3,5-(CH₃)₂-C₆H₃ | C₆H₅ | 98 | 91 |
| 11 | 0,1 | CH₃ | 4-OCH₃-C₆H₄ | 4-CH₃-C₆H₄ | 58 | 73 |
| 12 | 0,1 | CH₃ | 3-CH₃-C₆H₄ | 4-CH₃-C₆H₄ | >99 | 87 |
| 13 | 0,1 | CH₃ | 4-C₄H₉-C₆H₄ | 4-CH₃-C₆H₄ | 97 | 83 |

| | | | | | | |
|---|---|---|---|---|---|---|
| 20 bar H₂-Druck, LM= THF, Additiv KO*^{t}*Bu, 20°C, 48h bzw. *24h; Katalysator wurde nach Syntheseweg **B** direkt generiert | | | | | | |

### Beispiel 3c: Hydrierung von Propiophenon

**Tabelle 7. Hydrierung von Propiophenon mit 1e/[lrOCH₃(cod)]₂**

| Bsp. **3c** | Kat | LM | Additiv | T | t | Umsatz | ee |
|---|---|---|---|---|---|---|---|
| Nr. | [mol %] | | | [°C] | [h] | [%] | [%] |
| 01 | 0,05 | THF/Aceton | KO*^{t}*Bu | 20 | 48 | 100 | 51 |
| 02* | 0,05 | THF/Aceton | KO*^{t}*Bu | 20 | 6 | 60 | 74 |

| | | | | | | | |
|---|---|---|---|---|---|---|---|
| 20 bar H₂-Druck; * 80 bar H₂-Druck; Katalysator wurde nach Syntheseweg **B** direkt generiert | | | | | | | |

**Tabelle 8. Hydrierung von Propiophenon mit 1h/[IrOCH₃(cod)₂**

| Bsp. **3c** | Kat | LM | Additiv | T | t | Umsatz | ee |
|---|---|---|---|---|---|---|---|
| Nr. | [mol %] | | | [°C] | [h] | [%] | [%] |
| 01 | 0,05 | THF | KO*^{t}*Bu | 20 | 24 | 62 | 60 |
| 02 | 0,05 | THF | KN(SiMe₃)₂ | 20 | 24 | 62 | 49 |
| 03 | 0,05 | THF | KOSiMe₃ | 20 | 24 | 61 | 37 |
| 04 | 0,05 | THF/Aceton | KO*^{t}*Bu | 20 | 24 | 53 | 83 |
| 05 | 0,05 | THF/Aceton | KN(SiMe₃)₂ | 20 | 24 | 50 | 80 |

| | | | | | | | |
|---|---|---|---|---|---|---|---|
| 20 bar H₂-Druck; Katalysator wurde nach Syntheseweg **B** direkt generiert | | | | | | | |

### Beispiel 3d: Hydrierung von α-Methylpropiophenon

**Tabelle 9. Hydrierung von α-Methylpropiophenon mit 1h[lrOCH₃(cod)]₂**

| Bsp. **3d** | Kat | LM | Additiv | | t | Umsatz | ee |
|---|---|---|---|---|---|---|---|
| Nr. | [mol %] | | | [°C] | [h] | [%] | [%] |
| 01 | 0,05 | THF/Aceton | KO*^{t}*Bu | 20 | 24 | 61 | >99 |

| | | | | | | | |
|---|---|---|---|---|---|---|---|
| 20 bar H₂-Druck; Katalysator wurde nach Syntheseweg B direkt generiert | | | | | | | |

## Patentansprüche

1. Imidazo[1,5-*b*]pyridazin-substituierte Amino-Phosphor-Liganden der Formel **1.** 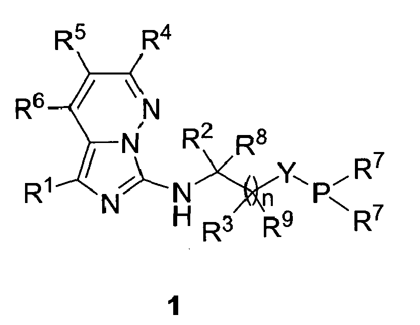 worin
n für eine ganze Zahl von 0 bis 30 steht,
Y für ein Sauerstoff- oder Schwefelatom oder eine NH-Gruppe steht
und
R¹-R⁹ unabhängig voneinander einen Rest ausgewählt aus der Gruppe C₁-C₂₄ Alkyl, C₂-C₂₄ Alkenyl, C₃-C₈ Cycloalkyl, C₃-C₈ Cycloalkenyl, C₆-C₁₄ Aryl, C₆-C₁₄ Aryl-C₁-C₁₀-Alkyl, C₂-C₁₃ Heteroaryl-C₁-C₁₀-Alkyl, C₁-C₁₀ Heteroalkyl, C₁-C₇ Heterocycloalkyl, C₂-C₁₃ Heteroaryl, Hydroxy, C₁-C₁₀-Alkoxy, C₆-C₁₄ Aryloxy, C₆-C₁₄ Aryl-C₁-C₁₀-Alkoxy, C₂-C₂₄ Acyl, Silyl, Boryl, darstellen können, wobei auch die beiden Reste R⁷ unabhängig voneinander für unterschiedliche oder gleiche Reste aus dieser Gruppe stehen können und
wobei die Reste R¹, R⁴, R⁵, R⁶ und jeder der beiden Reste R⁷ unabhängig voneinander auch einen Wasserstoffrest darstellen können,
wobei R² und R⁸ gleichzeitig nur Wasserstoffreste sein können, wenn mindestens einer der Reste R³ und R⁹ kein Wasserstoffsubstituent ist oder R³ und R⁹ an mindestens einem Kohlenstoff verschiedene Reste darstellen und
wobei R³ und R⁹ gleichzeitig nur Wasserstoffreste sein können, wenn mindestens einer der Reste R² und R⁸ kein Wasserstoffsubstituent ist oder R² und R⁸ verschiedene Reste darstellen und
bei denen die genannten Substituenten R¹ bis R⁹ jeweils ein oder mehrere weitere Substituenten besitzen können, und
wobei zwei benachbarte Substituenten R¹, R⁴, R⁵ oder R⁶ oder die Substituenten R², R³, R⁷, R⁸ und R⁹ auch verbrückt sein können, und wobei die Verbindungen der Formel 1 auch in Form ihres Amids vorliegen
können.

2. Verbindungen nach Anspruch 1, **dadurch gekennzeichnet, dass** R¹ einen Rest ausgewählt aus der Gruppe bestehend aus Phenyl,
Naphthyl, Benzyl, C₁-C₁₀ Alkyl oder C₂-C₁₃ Heteroaryl, die auch weitere Substituenten tragen können, darstellt, und/oder R⁴ und R⁶ unabhängig voneinander Reste ausgewählt aus der Gruppe
bestehend aus Phenyl, Naphthyl, Benzyl und C₁-C₁₀ Alkyl, die auch weitere Substituenten tragen können, darstellen, und/oder R⁵ ein Wasserstoffsubstituent ist, und/oder
R² und R⁸ Reste darstellen, die unabhängig voneinander ausgewählt sind
aus der Gruppe der C₆-C₁₄ Arylreste, der aliphatisch verzweigten oder unverzweigten C₁-C₁₀ Alkylreste, Phenyl-C₁-C₁₀-alkylreste, C₂-C₁₂ Acylreste oder Wasserstoffsubstituenten und/oder R³ und R⁹ die unabhängig voneinander Wasserstoffsubstituenten;
Hydroxylgruppen oder Reste ausgewählt aus der Gruppe der aliphatischen, verzweigten oder unverzweigten C₁-C₁₀ Alkylreste, der C₆-C₁₄ Arylreste, der Phenyl-C₁-C₁₀-alkylreste oder der C₂-C₁₂ Acylreste, wobei die genannten Alkyl- und Acylreste mit Hydroxy-oder Ketogruppen und die genannten Arylreste mit Hydroxygruppen substituiert sein können, und/oder
jeder der beiden Reste R⁷ unabhängig voneinander einen verbrückten oder
nicht verbrückten C₁-C₁₀ Alkyl-, C₆-C₁₄ Aryl-, C₅-C₈ Cycloalkyl, Phenyl-C₁-C₁₀-Alkyl, C₁-C₁₀ Alkoxy, C₆-C₁₄ Aryloxy-, C₆-C₁₄ Aryl-C₁-C₁₀-Alkoxy- oder Hydroxysubstituenten darstellen.

3. Verbindungen nach Anspruch 1, **dadurch gekennzeichnet, dass** die Gruppe -(CR³R⁹)n- eine Methylen-, Ethylen-, Propylen- oder Butylengruppe darstellt und
R¹, R², R⁴, R⁵ und R⁶ unabhängig voneinander einen Rest ausgewählt aus
der Gruppe C₁-C₁₀ Alkyl, C₂-C₁₀ Alkenyl, C₃-C₈ Cycloalkyl, C₃-C₈ Cycloalkenyl, C₆-C₁₄ Aryl, C₆-C₁₄ Aryl-C₁-C₁₀-Alkyl, C₂-C₁₃ Heteroaryl-C₁-C₁₀-Alkyl, C₂-C₁₂ Acyl, C₁-C₁₀ Alkoxy, C₁-C₇ Heterocycloalkyl, C₂-C₁₃ Heteroaryl, Hydoxyl, darstellen können und wobei die Reste
R¹, R⁴, R⁵ und R⁶ unabhängig voneinander auch einen Wasserstoffrest
darstellen können und
jeder der beiden Reste R⁷ unabhängig voneinander für einen verbrückten
oder nicht verbrückten C₁-C₁₀ Alkyl-, C₆-C₁₄ Aryl-, C₅-C₈ Cycloalkyl, Phenyl-C₁-C₁₀-Alkyl, C₁-C₁₀ Alkoxy, Phenoxy, Phenyl-C₁-C₅-alkoxysubstituenten steht oder beide Reste R⁷ zusammen für einen Phenyl-1,2-dioxysubstituenten stehen und
R⁸ einen Wasserstoffrest darstellt.

4. Verbindungen nach einem der Ansprüche 1 bis 3, **dadurch gekennzeichnet, dass**
R¹ für einen Wasserstoff-, Methyl- oder Phenylrest steht und
einer der Reste R² und R⁸ für einen Methyl-, Ethyl-, n-Propyl-, iso-Propyl, Butyl-, wie z. B. iso-Butyl oder tert.-Butyl- oder für einen Phenyl-, Benzyl-oder 2-Phenylethylrest und der andere Rest für einen Wasserstoffrest steht und
R⁴ und R⁶ unabhängig voneinander für einen Wasserstoff- oder Methylrest stehen und
R⁵ für einen Wasserstoffrest steht und
R³ und R⁹ für einen Wasserstoffrest stehen und
die beiden Reste R⁷ für zwei unterschiedliche oder gleiche Reste ausgewählt aus der Gruppe Methyl-, Ethyl-, n-Propyl-, iso-Propyl-, Butyl-, wie z. B. iso-Butyl- oder tert.-Butyl-, Methoxy-, Ethoxy-, Cyclohexyl-, Phenyl-, Phenoxy-, Phenylmethoxy- oder Phenylethoxy- stehen oder die beiden Reste R⁷ zusammen einen Rest der Formel -O-CH₂-CH₂-O- oder einen Phenyl-1,2-dioxyrest bilden und
Y für ein Sauerstoffatom steht und
n gleich 1, 2, 3 oder 4 ist.

5. Verbindungen nach einem der Ansprüche 1 oder 2, **dadurch gekennzeichnet, dass**
R¹ für einen Wasserstoff-, Methyl- oder Phenylrest steht und
einer der Reste R³ oder R⁹ für einen Methyl-, Ethyl-, n-Propyl-, iso-Propyl, Butyl-, wie z.B. iso-Butyl- oder tert.-Butyl- oder für einen Phenyl-, Benzyl-oder 2-Phenylethylrest und der andere Rest für einen Wasserstoffrest steht und
R⁴ und R⁶ unabhängig voneinander für einen Wasserstoff- oder Methylrest stehen und
R⁵ für einen Wasserstoffrest steht und
R² und R⁸ für einen Wasserstoffrest stehen und
die beiden Reste R⁷ für zwei unterschiedliche oder gleiche Reste ausgewählt aus der Gruppe Methyl-, Ethyl-, n-Propyl, iso-Propyl-, Butyl- wie z. B. iso-Butyl oder tert.-Butyl-, Methoxy-, Ethoxy-, Cyclohexyl-, Phenyl-, Phenoxy-, Phenylmethoxy-oder Phenylethoxy- stehen oder die beiden Reste R⁷ zusammen einen Rest der Formel -O-CH₂-CH₂-O- oder einen Phenyl-1,2-dioxyrest bilden und
Y für ein Sauerstoffatom steht und
n gleich 1, 2, 3 oder 4 ist.

6. Verbindungen nach einem der Ansprüche 1 bis 5, **dadurch gekennzeichnet, dass** die Verbindungen der Formel **1** optisch aktiv sind.

7. Verbindungen nach Anspruch 6, **dadurch gekennzeichnet, dass** die Verbindungen der Formel **1** enantiomerenangereichert sind.

8. Verbindungen nach einem der Ansprüche 1 bis 7, **dadurch gekennzeichnet, dass** sie in neutraler, ionischer oder ein- oder mehrfach deprotonierter Form vorliegen.

9. Komplexverbindungen enthalten mindestens einen Liganden nach einem der Ansprüche 1 bis 8 und mindestens ein Metallatom oder -ion.

10. Komplexverbindungen gemäß Anspruch 9, **dadurch gekennzeichnet, dass** die Komplexverbindungen mindestens ein Übergangsmetallatom oder -ion ausgewählt aus der Gruppe Palladium, Platin, Rhodium, Ruthenium, Osmium, Iridium, Kobalt, Eisen, Nickel, Kupfer, Silber und/oder Gold enthalten.

11. Komplexverbindungen gemäß einem der Ansprüche 9 bis 10, **dadurch gekennzeichnet, dass** die Komplexverbindung eine Verbindung der Formel **2** ist, 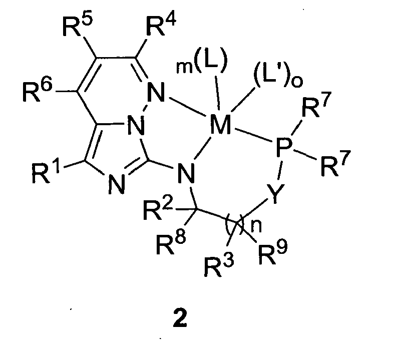 wobei
n, Y und die Substituenten R¹ bis R⁹ die in Anspruch 1 genannte Bedeutung haben und
m und o unabhängig voneinander 0 oder 1 sein können und
M jeweils ein Metall darstellt und
L und L' unabhängig voneinander für einen einzähnigen Liganden oder L und L' zusammen für einen zweizähnigen Liganden stehen.

12. Katalysatoren nach einem der Ansprüche 9 bis 11, **dadurch gekennzeichnet, dass** der Katalysator in Verbindung mit einem Additiv, ausgewählt aus der Gruppe der Metalloxidverbindungen, Alkali- oder Erdalkalimetall- alkylate, -allylate, -arylate, -phosphate, -carbonate, -hydroxide, -hydride, -halogenide, -amide, der Silyloxyverbindungen, Aminverbindungen oder der Alkalimetalle vorliegt.

13. Verwendung einer Komplexverbindung nach den Ansprüchen 9 bis 12 als Katalysator zur asymmetrischen Hydrierung.

14. Verfahren zur asymmetrischen Synthese von Alkoholen und Aminen, umfassend die enantioselektive Hydrierung von Ketonen und Iminen mit einem Katalysator entsprechend den Ansprüchen 9 bis 13.
